# EUROPÄISCHE PATENTSCHRIFT

(11) **EP 1 829 185 B1**
(45) Veröffentlichungstag und Bekanntmachung des Hinweises auf die Patenterteilung: **11.11.2009**
(21) Anmeldenummer: 05821106.1
(22) Anmeldetag: 30.11.2005
(51) Int. Cl.: H02J 7/00

(54) **LADUNGSUMVERTEILUNGSSCHALTUNG**
CHARGE REDISTRIBUTION CIRCUIT
CIRCUIT DE REDISTRIBUTION DE CHARGE

(30) Priorität: 23.12.2004 DE 102004062186
(43) Veröffentlichungstag der Anmeldung: 05.09.2007
(73) Patentinhaber: TEMIC Automotive Electric Motors GmbH, 10553 Berlin (DE)
(72) Erfinder: RIDDER, Matthias, D-90542 Eckental (DE); SCHWENDINGER, Andreas, D-83236 Übersee (DE); MALIK, Manfred, D-82377 Penzberg (DE)
(86) Internationale Anmeldenummer: PCT/DE2005/002155
(87) Internationale Veröffentlichungsnummer: WO 2006/066527

(56) Entgegenhaltungen:
- WO-A-99/32323
- US-B1- 6 511 764
- ANBUKY A H ET AL: "VRLA battery intelligent node" INTELEC 2002. 24TH. INTERNATIONAL TELECOMMUNICATIONS ENERGY CONFERENCE. MONTREAL, QUEBEC, CANADA, SEPT. 29 - OCT. 3, 2002, INTELEC. INTERNATIONAL TELECOMMUNICATIONS ENERGY CONFERENCE, NEW YORK, NY : IEEE, US, Bd. CONF. 24, 29. September 2002 (2002-09-29), Seiten 169-175, XP010614618 ISBN: 0-7803-7512-2
- SCHMIDT H ET AL INSTITUTE OF ELECTRICAL AND ELECTRONICS ENGINEERS: "THE CHARGE EQUALIZER A NEW SYSTEM TO EXTEND BATTERY LIFETIME IN PHOTOVOLTAIC SYSTEMS, U.P.S. AND ELECTRIC VEHICLES" INTERNATIONAL TELECOMMUNICATIONS ENERGY CONFERENCE. (INTELEC). PARIS, SEPT. 27 - 30, 1993, NEW YORK, IEEE, US, Bd. VOL. 2 CONF. 15, 27. September 1993 (1993-09-27), Seiten 146-151, XP000496211 in der Anmeldung erwähnt

## Beschreibung

### GEBIET DER ERFINDUNG

Die Erfindung bezieht sich allgemein auf die Speicherung elektrischer Energie, und beispielsweise auf eine Ladungsumverteilungsschaltung für einen Energiespeicher mit mehreren, in Reihe geschalteten Speicherelementen, wobei die Ladungsumverteilungsschaltung mehrere Ladungsumverteilungs-Steuereinheiten zur Spannungsübervachung und Ladungsumverteilung umfasst, denen jeweils eine Energiespeicher-Untergruppe von Speicherelementen zugeordnet ist. Die Erfindung bezieht sich auch auf einen, mit dieser Schaltung ausgerüsteten Energiespeicher sowie ein mit einem solchen Energiespeicher ausgerüstetes Fahrzeug-Antriebssystem.

### HINTERGRUND DER ERFINDUNG

Speicher für elektrische Energie sind üblicherweise aus einzelnen Speicherelementen aufgebaut. Die nominelle Betriebsspannung dieser Speicherelemente liegt meist bei relativ niedrigen Spannungswerten, z. B. im Bereich von 2 bis 2,5 V bei Ultracap-Kondensatoren. Für die meisten Anwendungen ist jedoch eine weit höhere Betriebsspannung des Energiespeichers erforderlich. So werden beispielsweise die elektrischen Antriebe von Hybridfahrzeugen, je nach Typ, mit 48 V bis zu 300 V betrieben, so dass ein zur Speisung eines solchen Antriebs eingesetzter Energiespeicher eine entsprechend hohe Betriebsspannung aufweisen soll. Um diese hohe Spannung zu erreichen, sind bei Energiespeichern typischerweise eine entsprechende Anzahl von Speicherelementen in Reihe geschaltet. Beispielsweise kann ein 48 V-Energiespeicher durch eine Serienschaltung von 20 Ultracap-Kondensatoren mit einer nominellen Betriebsspannung von ca. 2,5 V gebildet werden.

Es ist inzwischen bekannt, dass die Lebensdauer derartiger, aus einer Serienschaltung einer relativ großen Zahl einzelner Speicherelemente aufgebauten Energiespeicher durch Inhomogenitäten im Ladungszustand der einzelnen Speicherelemente wesentlich verkürzt wird (so z.B. aus H. Schmidt et al., "The charpe equalizer - a new system to extend battery lifetime in photovoltaic systems, U.P.S. and electric vehicles", International Telecommunications Energy Conference, Intelec, Paris, 27. bis 30. September 1993, IEEE, Bd. 3, Cord 115, S. 146-15 1). Zuvor hatte man unterstellt, dass bei einer Serienschaltung einzelner Speicherelemente alle diese Elemente identische Eigenschaften haben und sich immer im gleichen Ladungszustand befinden. Tatsächlich hat jedoch jedes Speicherelement individuelle Kenngrößen (wie Kapazität, Selbstentladungsrate), die von denjenigen der anderen Elemente i. a. geringfügig abweichen. Bei einer einfachen Serienschaltung können solche Unterschiede einerseits - bei Entladevorgängen - zu Tiefenentladungen oder sogar inversen Ladungen von Speicherelementen geringerer Kapazität, und andererseits - bei Aufladevorgängen - zu Überladungen von vorzeitig voll aufgeladenen Speicherelementen führen. Dieses Verhalten ist i. a. divergent; d. h. selbst kleine Unterschiede zwischen den individuellen Speicherelementen führen im Lauf der Zeit zu den genannten Erscheinungen, wenn nur eine ausreichend große Zahl von Lade-/Entladezyklen durchlaufen wird. Die genannten Erscheinungen führen zunächst zur Beschädigung oder zum Ausfall des betreffenden Speicherelements, und können schließlich - nach Art einer Kettenreaktion - den vorzeitigen Ausfall des ganzen Energiespeichers bewirken.

Um derartige Auswirkungen der (in der Praxis unvermeidlichen) Unterschiede zwischen einzelnen Speicherelementen zu vermeiden, haben bereits mehrere Autoren verschiedene Verfahren vorgeschlagen, mit denen eine Zwangssymmetrierung des Ladezustands der einzelnen Speicherelemente durchgeführt wird, so Schmidt et al. in dem bereits oben genannten Konferenzbeitrag und in EP 0 432 639 A2, N. Kutkut et al. in "Dynamic equalization techniques for series battery stacks", Telecommunications Energy Conference 1996 (Intelec), Boston, 6. bis 10. Oktober 1996, IEEE 0-7803-3507-4196, S. 514-521, sowie Ridder in EP 1 283 580 A2. Gemeinsam liegt diesen Vorschlägen der Gedanke zugrunde, die Spannung der Speicherelemente zu überwachen, und höher aufgeladenen Speicherelementen Ladung zu entnehmen und/oder niedriger aufgeladenen Ladung zuzuführen (wobei bei manchen der Vorschläge allen Speicherelementen Ladung entnommen oder zugeführt wird, jedoch den höher aufgeladenen mehr entnommen bzw. weniger zugeführt wird als den niedrig aufgeladenen). Laut Schmidt ist es auch bekannt, Untergruppen von in Serie geschalteten Speicherelementen zu bilden und diese als Einheit (statt alle Speicherelemente einzeln) in der beschriebenen Weise zu überwachen und symmetrisieren. Während bei frühen Vorschlägen (von denen beispielsweise Schmidt in dem genannten Konferenzpaper berichtet) die den höher aufgeladenen Speicherelementen entnommene Energie in Heizwiderständen dissipiert wurde, wird gemäß jüngeren Vorschlägen die entnommene Energie wieder dem Energiespeicher (d.h. im Ergebnis den anderen Speicherelementen) zugeführt, oder es wird alternativ die den niedrig aufgeladenen Speicherelementen zugeführte Energie dem Energiespeicher (d. h. im Ergebnis den anderen Speicherelementen) entnommen. Eine solche Umspeicherung ist wirkungsgradmäßig günstiger, da bei ihr nicht die gesamte umgespeicherte Energie verloren geht, sondern nur die mit dem Umspeichervorgang einhergehenden Verluste. Mit diesen jüngeren Vorschlägen lässt sich - bei relativ gutem Wirkungsgrad - die Lebensdauer von Energiespeichern der genannten Art beträchtlich verlängern. Dokumente XP 010 614 618 und WO 9 932 323 offenbaren gattungsgleiche Ladungsumverteilungsschaltungen für Energiespeicher mit mehrehen Speicherelementen.

Soweit ersichtlich machen die genannten Veröffentlichungen jedoch keine Angaben dazu, wie die der Symmetrierung dienende Ladungsumverteilungsschaltung selbst mit Strom versorgt werden kann. Vermutlich haben die Autoren der genannten Druckschriften im Auge gehabt, dass die Ladungsumverteilungsschaltung entweder aus einer externen Stromquelle oder aus dem zu symmetrisierenden Energiespeicher selbst mit dem für ihren Betrieb nötigen Strom versorgt wird. Im Übrigen ist in anderem Zusammenhang bereits vorgeschlagen worden, einzelne Batteriezellen mit einem Steuergerät auszurüsten, das seinen Betriebsstrom aus der zu überwachenden Batteriezelle erhält (US 6,163,13 1). Auch bei einem Batteriediagnosegerät mit Messmodulen jeweils für eine einzelne Batteriezelle oder - alternativ - für jeweils eine Gruppe von Batteriezellen ist vorgeschlagen worden, dass diese Messmodule ihren Betriebsstrom jeweils aus der überwachten Zelle bzw. der überwachten Gruppe von Zellen beziehen (DE 199 21 675 Al).

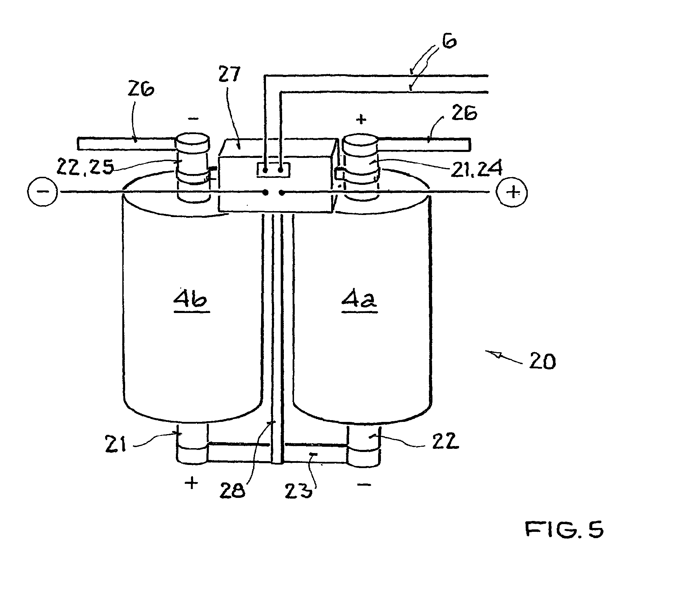

Insgesamt lässt sich mit einer Ladungsumverteilungsschaltung, die einzelnen Speicherelementen bzw. Gruppen von Speicherelementen selektiv Ladung entnimmt oder zuführt (z .B. gemäß Fig. 5 des genannten Konferenzbeitrags von Schmidt), eine funktionierende Spannungssymmetrierung durchführen. Jedoch ist beispielsweise diese bei Schmidt angegebene Schaltung recht aufwändig in der Realisierung. Der vorliegenden Erfindung liegt daher, beispielsweise ausgehend von diesem Stand der Technik, die Aufgabe zugrunde, eine relativ einfache Ladungsumverteilungsschaltung bereitzustellen, die eine Spannungssymmetrierung der Speicherelemente eines Energiespeichers erlaubt.

### KURZFASSUNG DER ERFINDUNG

Die Erfindung stellt eine Ladungsumverteilungsschaltung für einen Energiespeicher mit mehreren, in Reihe geschalteten Speicherelementen bereit. Die Ladungsumverteilungsschaltung umfasst mehrere Ladungsumverteilungs-Steuereinheiten zur Spannungsüberwachung und Ladungsumverteilung. Den Ladungsumverteilungs-Steuereinheiten ist jeweils eine Energiespeicher-Untergruppe von Speicherelementen zugeordnet. Diese entnehmen die zu ihrer eigenen Versorgung dienende Energie jeweils aus der ihnen zugeordneten Untergruppe. Sie werden so mit einer Spannung versorgt, die größer als die Spannung eines einzelnen der Speicherelemente und kleiner als die Spannung des Energiespeichers ist. Die Ladungsumverteilungsschaltung ist so eingerichtet, dass eine Spannungsüberwachung und eine darauf basierende Ladungsumverteilung bei jedem einzelnen der Speicherelemente erfolgt.

Die Erfindung ist gemäß einem weiteren Aspekt auf einen Energiespeicher mit einer Ladungsumverteilungsschaltung der oben genannten Art gerichtet.

Die Erfindung ist gemäß einem weiteren Aspekt auf ein Antriebssystem für ein Fahrzeug gerichtet, das zu Antriebszwecken einen Verbrennungsmotor sowie eine elektrischen Maschine aufweist und zur Speisung der elektrischen Maschine mit einer Ladungsumverteilungsschaltung bzw. mit einem Energiespeicher der oben genannten Art ausgerüstet ist.

Weitere Merkmale sind in den offenbarten Vorrichtungen enthalten oder gehen für den fachmännischen Leser aus der folgenden detaillierten Beschreibung von Ausführungsformen und den angefügten Zeichnungen hervor.

### KURZE BESCHREIBUNG DER ZEICHNUNG

Ausführungsformen der Erfindung werden nun beispielhaft und unter Bezugnahme auf die angefügte Zeichnung beschrieben, in der:
Fig. 1 eine Darstellung eines Energiespeichers mit einer Ausführungsform einer Ladungsumverteilungsschaltung ist, bei der Ladungsumverteilungs-Steuereinheiten schematisch dargestellt sind;
Fig. 2 eine detailliertere Darstellung einer Ladungsumverteilungs-Steuereinheit von Fig. 1 ist;
Fig. 3 ein Ablaufdiagramm zur Veranschaulichung der Aktivität einer Ladungsumverteilungs-Steuereinheit ist;
Fig. 4 schematische Spannungsverläufe, als Funktion der Zeit, von Energiespeicher-Untergruppen und den einzelnen Speicherelementen vor und während Spannungssymmetrierungsvorgängen zeigt;
Fig. 5 eine Zwillingsanordnung von Speicherelementen, die eine Untergruppe bilden, zeigt; und
Fig. 6 eine schematisch vereinfachte Darstellung eines Kraftfahrzeug-Antriebssystems mit einer Ausführungsform des beschriebenen Energiespeichers ist.

In den Figuren sind funktionsgleiche Teile mit denselben Bezugszeichen gekennzeichnet.

### BESCHREIBUNG DER BEVORZUGTEN AUSFÜHRUNGSFORMEN

Bevor die Figuren naher erläutert werden, folgen zunächst einige Anmerkungen zu den bevorzugten Ausführungsformen.

Die Ausführungsformen betreffen einen Energiespeicher mit mehreren in Reihe geschalteten Speicherelementen. Bei diesen handelt es sich beispielsweise um galvanische Zellen, Kondensatoren, Ultracap-Kondensatoren, etc. Der Grund für die Reihenschaltung der Speicherelemente liegt - wie üblich - darin, dass der Energiespeicher - als Ganzes betrachtet - eine höhere nominelle Betriebsspannung liefern soll als diejenige eines einzelnen Speicherelements. Beispielsweise liefert ein Energiespeicher mit 20 in Reihe geschalteten 2,5V-Speicherelementen eine Spannung von ca. 48-50V. Natürlich kann ein einzelnes Speicherelement durch eine Parallelschaltung mehrerer Unterelemente gebildet sein; derartiges wird ungeachtet seiner inneren Struktur in der vorliegenden Beschreibung als "Speicherelement" bezeichnet.

Wie eingangs erläutert wurde, würden bei einer reinen Reihenschaltung (ohne Ladungsausgleich zwischen den einzelnen Speicherelementen) die unvermeidlich vorhandenen Unterschiede zwischen den einzelnen Speicherelementen zu ungleichen Ladungszuständen führen. Bei den Ausführungsformen ist daher eine Ladungsumverteilungsschaltung vorgesehen, welche zur Zwangs-Spannungssymmetrierung der in Reihe geschalteten Speicherelemente geeignet ist. Diese Ladungsumverteilungsschaltung ist aus mehreren Ladungsumverteilungs-Steuereinheiten zur Spannungsüberwachung und Ladungsumverteilung aufgebaut. Bei den Ausführungsformen beziehen diese Ladungsumverteilungs-Steuereinheiten die zu ihrer eigenen Versorgung dienende Energie aus dem Energiespeicher selbst.

Bei einigen der Ausführungsformen ist das Herz der Ladungsumverteilungs-Steuereinheiten jeweils ein Mikrocontroller, der die verschiedenen Funktionen der Ladungsumverteilungs-Steuereinheit, also insbesondere die Spannungsüberwachung und - symmetrierung, steuert. Verschiedene handelsübliche Mikrocontroller arbeiten mit Versorgungsspannungen, die über der nominellen Betriebsspannung verschiedener Typen von Speicherelementen liegt. Verschiedene Mikrocontroller akzeptieren zwar größere Bereiche von Versorgungsspannungen, welche bei manchen Ausführungsformen die nominelle Betriebsspannung der Speicherelemente zwar einschließen, wobei die nominelle Betriebsspannung aber oft am unteren Rand des Mikrocontroller-Versorgungsspannungsbereichs liegt. Beispielsweise arbeiten Mikrocontroller der Baureihe PIC10F der Firma Microchip Technology Inc. mit einer Versorgungsspannung im Bereich von 2,0 V bis 5,5 V, während heute übliche Ultracap-Kondensatoren z. B. eine nominelle Betriebsspannung von 2,5 V, also eine am unteren Bereichsrand liegende Betriebsspannung haben. Bei Entladung eines solchen Ultracap-Speicherelements würde die von diesem abgegebene Spannung daher recht bald die untere Grenze des Betriebsspannungsbereichs des Mikrocontrollers unterschreiten. Bei manchen der Ausführungsformen ist daher eine Ladungsumverteilungs-Steuereinheit nicht jeweils einem einzelnen Speicherelement, sondern einer Untergruppe von mehreren Speicherelementen zugeordnet. Jede Ladungsumverteilungs-Steuereinheit enthält bei diesen Ausführungsformen die zu ihrer eigenen Versorgung dienende Energie aus der jeweils zugeordneten Untergruppe. Die Ladungsumverteilungs-Steuereinheit wird hierdurch mit einer Spannung versorgt, die größer ist als die Spannung des einzelnen Speicherelements und - da es sich ja nur um eine Untergruppe des Energiespeichers, nicht jedoch den gesamten Energiespeicher handelt - kleiner ist als die Gesamtspannung des Energiespeichers. Bei den Ausführungsformen ist diese Spannung die Summe der Spannungen der einzelnen, der Ladungsumverteilungs-Steuereinheit zugeordneten Speicherelemente, diese sind also in Reihe geschaltet. Bei manchen Ausführungsformen ist eine Ladungsumverteilungs-Steuereinheit jeweils genau zwei in Serie geschalteten Speicherelementen zugeordnet. Handelt es sich beispielsweise um zwei Ultracap-Kondensatoren mit einer Betriebsspannung von 2,5 V, so werden die Ladungsumverteilungs-Steuereinheiten - bei voll aufgeladenen Speicherelementen - mit einer Spannung von 5,0 V versorgt. Es kann hiermit eine relativ weitgehende Entladung (z. B. bis hinab zu ca. 40% der Volladung) stattfinden, bis die untere Grenze des Versorgungsspannungsbereichs (im oben genannten Beispiel 2,0 V) unterschritten würde.

Andererseits ist es bei den Ausführungsformen nicht etwa so, dass die Untergruppen die kleinsten, von der Ladungsumverteilungsschaltung überwachten und (z. B. zum Zweck der Spannungssymmetrierung) umladbaren Speichereinheiten darstellen, was z. B. der Fall wäre, wenn die Ladungsumverteilungs-Steuereinheiten die ihnen jeweils zugeordneten Untergruppen - wie im Stand der Technik - als "Black Box" betrachten würden. Vielmehr ist die Ladungsumverteilungsschaltung so eingerichtet, dass eine Überwachung und - wenn nötig - eine Ladungsumverteilung bei jedem einzelnen der in Serie geschalteten Speicherelemente der Untergruppen durch die jeweilige Ladungsumverteilungs-Steuereinheit erfolgt.

Bei den Ausführungsformen wird somit erreicht, dass einerseits die Ladungsumverteilungs-Steuereinheiten mit geeignet hohen Versorgungsspannungen aus dem Energiespeicher versorgt werden, dass aber andererseits z. B. etwaige Spannungsunsymmetrien auch innerhalb der dieser Versorgung dienenden Energiespeicher-Untergruppen vermieden werden. Aufgrund der Versorgung mit geeigneter Spannung aus Untergruppen brauchen die Ladungsumverteilungs-Steuereinheiten nicht für eine Hoch- oder Tiefsetzung ihrer Versorgungsspannung sorgen; ersteres wäre z. B. bei einer Versorgung aus einzelnen Speicherelementen, letzteres bei einer Versorgung aus dem gesamten Energiespeicher der Fall. Zumindest bei einigen Ausführungsformen sind die Ladungsumverteilungs-Steuereinheiten daher nicht mit einem Versorgungsspannungswandler ausgerüstet.

Bei einigen der Ausführungsformen erfolgt die Ladungsumverteilung derart, dass z. B. zum Zweck der Spannungssymmetrierung Ladung einerseits zwischen den zu einer Untergruppe gehörenden Speicherelementen und andererseits zwischen den Energiespeicher-Untergruppen umverteilt wird. Bei einigen dieser Ausführungsformen sind hierzu die Ladungsumverteilungs-Steuereinheiten einerseits zum Ladungsaustausch der Speicherelemente untereinander mit untergruppen-internen, den einzelnen Speicherelementen zugeordneten Spannungswandlern und andererseits zum Ladungsaustausch zwischen Untergruppen mit jeweils einem, der ganzen betreffenden Untergruppe zugeordneten Spannungswandler ausgerüstet.

Wie eingangs bereits erwähnt wurde, kann eine Spannungssymmetrierung im Prinzip entweder durch Energieentnahme aus Speicherelementen bzw. Untergruppen mit relativ hoch liegender Spannung oder durch Energiezuführung in Speicherelemente bzw. Untergruppen mit relativ niedrig liegender Spannung erfolgen. Natürlich ist es möglich, beides als auswählbare Alternativen vorzusehen. Entsprechend sind bei einigen Ausführungsformen die Spannungswandler als bidirektionale Spannungswandler ausgeführt, welche dem jeweils zugeordneten Speicherelement bzw. der zugeordneten Untergruppe wahlweise Energie entnehmen oder zuführen können. Bei anderen Ausführungsformen ist hingegen nur eine dieser Möglichkeiten realisiert; so erfolgt bei einigen Ausführungsformen zur Spannungssymmetrierung eine Energieentnahme aus Speicherelementen bzw. Untergruppen, deren Spannung relativ hoch liegt. Letztere Maßnahme ist i. a. für die angestrebte Lebensdauererhöhung ausreichend, da sie - der Lebensdauer besonders abträgliche - überhöhte Spannungen bei voller Aufladung der Speicherelemente vermeiden hilft. "Relativ hoch" bedeutet beispielsweise "oberhalb eines vorbestimmten Grenzwerts" oder, bei anderen Ausführungsformen, "um einen (relativen oder absoluten) Betrag oberhalb des Durchschnitts der gemessenen Spannungen der Speicherelemente bzw. Untergruppen".

Bei einigen der Ausführungsformen wird die einer Untergruppe zwecks Spannungssymmetrierung entnommene Energie der oder den anderen Untergruppen zugeführt. Dies kann z. B. dadurch erfolgen, dass diese Energie dem gesamten Energiespeicher (also der gesamten Serienschaltung von Speicherelementen) zugeführt wird. Eine derartige Zuführung führt natürlich auch wieder zu einer geringen Ladungszunahme bei der Untergruppe, deren Spannung eigentlich verringert werden soll. Da dieser Beitrag jedoch um einen Faktor entsprechend der inversen Anzahl von Untergruppen "verdünnt" wird, verbleibt insgesamt eine Ladungsabnahme bei der betrachteten Untergruppe, so dass man diese verschiedenen Energieflüsse so betrachten kann, als würde ein entnommener Netto-Energiebetrag nur den anderen Untergruppen zugeführt. In entsprechender Weise erfolgt bei manchen der Ausführungsformen die Spannungssymmetrierung eines oder mehrerer der Speicherelemente innerhalb der Untergruppen derart, dass die einem Speicherelement einer Untergruppe entnommene Energie dem oder den anderen Speicherelementen der Untergruppe zugeführt wird.

Wie bereits oben erwähnt wurde, handelt es sich bei den Speicherelementen beispielsweise um galvanische Elemente, Kondensatoren oder Ultracap-Kondensatoren. Galvanische Elemente speichern die Energie in chemischer Form. Damit lassen sich zwar relativ hohe Energiedichten erzielen, andererseits ist die Umwandlung chemischer in elektrische Energie mit Verlusten verbunden und läuft i. a. relativ langsam ab, so dass nur relativ kleine Leistungen, bezogen auf die insgesamt speicherbare Energiemenge, entnehmbar sind. Zudem sinkt die Umwandlungsgeschwindigkeit i. a. mit abnehmender Temperatur, und ferner ist die Lebensdauer solcher elektrochemischer Batterien beschränkt. Kondensatoren hingegen speichern die Energie direkt in elektrischer Form, so dass diese praktisch verlust- und verzögerungsfrei und beliebig oft entnommen werden kann. Allerdings ist die Energiedichte bei herkömmlichen Kondensatoren relativ klein (typischerweise 0,01 Wh/kg beim Elektrolytkondensator). Sog. Ultracap-Kondensatoren haben die Vorteile herkömmlicher Kondensatoren (praktisch verlustfreie, schnelle und häufige Entladbarkeit), erreichen jedoch weit höhere Energiedichten. Diese liegen z. B. ein bis zwei Größenordnungen über denjenigen von Aluminium-Elektrolytkondensatoren. Der Speichermechanismus beruht bei ihnen auf der Bewegung von Ionen im elektrischen Feld (und nicht nur der Polarisation von Ionen, wie beim herkömmlichen Kondensator mit Dielektrikum). Und zwar kommt es zur Ladung/Entladung einer elektrochemischen Doppelschicht (die Ultracap-Kondensatoren werden daher auch Doppelschichtkondensatoren genannt). Diese Schicht umfasst zwei Phasen: Beispielsweise elektrisch leitfähigen Kohlenstoff auf der einen und Ionen, die in einem Lösungsmittel gelöst sind, auf der anderen Seite. Beim Laden und Entladen werden die Ionen von den polarisierten Kohlenstoffelektroden angezogen bzw. abgestoßen. Da der Abstand der Ladungsträger i. a. nur wenige Nanometer beträgt, und die Oberfläche solcher Kohlenstoffmaterialien sehr groß ist, lassen sich relativ hohe Kapazitäten bei geringem Volumen erzielen (siehe z. B. T. Dietrich: UltraCaps - Power für innovative Automobilapplikationen, in A. Krappel (Hrsg.): "Kurbelwellenstartgenerator (KSG) - Basis für zukünftige Fahrzeugkonzepte, 2. Auflage, Expert-Verlag 2000, S. 202-207).

Bei einigen der Ausführungsformen weist eine Energiespeicher-Untergruppe - wie erwähnt - jeweils zwei Speicherelemente auf. Obwohl - je nach verwendetem Speicherelement-Typ und gewünschter Versorgungsspannung für die Ladungsumverteilungs-Steuereinheiten - die Untergruppen auch anders (z. B. mit jeweils drei Speicherelementen) aufgebaut sein können, erlauben jeweils zwei Speicherelemente einen besonders einfachen Zwillingsaufbau. Wenn, wie bei manchen der Ausführungsformen, die Speicherelemente Stromanschlüsse an gegenüberliegenden Seiten aufweisen, können die beiden Speicherelemente in einer Zwillingsanordnung mit entgegengesetzter Orientierung hinsichtlich der Polarität der Stromanschlüsse zusammengefasst sein. Die beiden Stromanschlüsse der Zwillingsanordnung auf einer Seite (es handelt sich beispielsweise um den Minus-Pol des einen Speicherelements und den Plus-Pol des anderen Speicherelements) sind bei einigen dieser Ausführungsformen elektrisch durchverbunden. Die Stromanschlüsse der Zwillingsanordnung auf der anderen Seite (also bei dem oben genannten Beispiel der Plus-Pol des erstgenannten Speicherelements und der Minus-Pol des zweitgenannten Speicherelements) bilden die "Anschlussklemmen" der Untergruppe nach außen, sie sind in Serie mit entsprechenden Stromanschlüssen der anderen Untergruppen geschaltet. Bei einigen der Ausführungsformen sind die Ladungsumverteilungs-Steuereinheiten jeweils mit den genannten Anschlussklemmen und den durchverbundenen Stromanschlüssen elektrisch verbunden.

Eine beispielhafte und bevorzuge Verwendung der genannten Ladungsumverteilungsschaltung erfolgt bei einem Kraftfahrzeug, das zu Antriebszwecken einen Verbrennungsmotor sowie eine elektrische Maschine aufweist und zur Speisung der elektrischen Maschine mit einem Energiespeicher und einer Ladungsumverteilungsschaltung gemäß einer der oben erwähnten Ausführungsformen ausgerüstet ist.

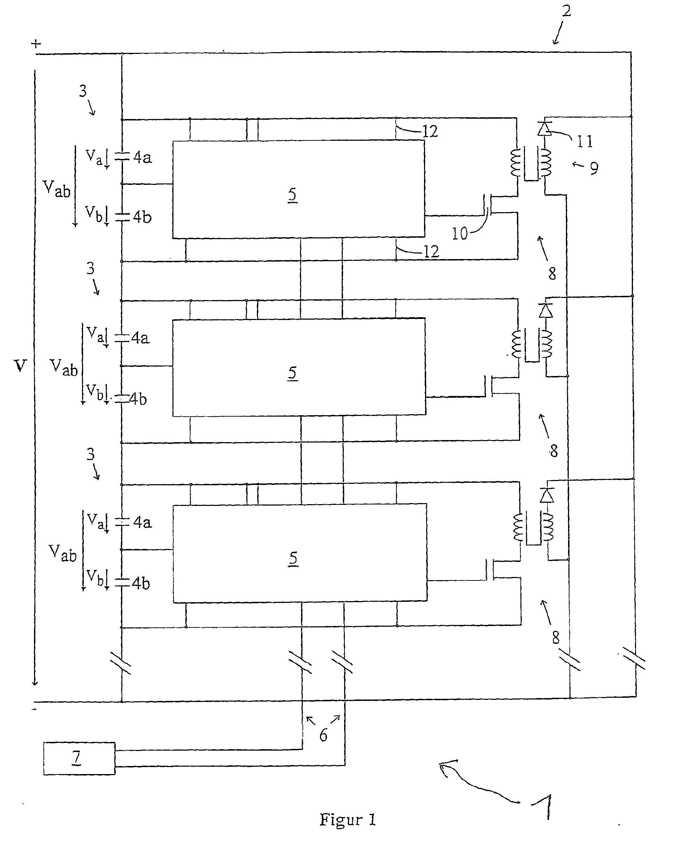

Nun zurückkommend auf Figur 1, ist dort ein Ausschnitt eines Energiespeichers 1 mit einer Ladungsumverteilungsschaltung 2 dargestellt. Der Energiespeicher 1 ist durch eine Serienschaltung mehrerer Energiespeicher-Untergruppen 3 gebildet (von denen in Fig. 1 drei dargestellt sind). Jede dieser Untergruppen 3 ist wiederum aus einer Serienschaltung von zwei Speicherelementen 4 aufgebaut, wobei in Fig. 1 das jeweils höher liegende Speicherelement mit "4a" und das jeweils tiefer liegende mit "4b" bezeichnet ist. Die Spannung der Speicherelemente 4 ist mit Vₐ bzw. V_{b} bezeichnet. Die Spannung der Untergruppen 3, welche die Summe der Spannungen Vₐ und V_{b} ist, ist mit V_{ab} bezeichnet. Die Spannung des gesamten Energiespeichers, welche die Summe der Spannungen V_{ab} ist, ist schließlich mit V bezeichnet. Bei den Speicherelementen 4 handelt es sich beispielsweise um Ultracap Kondensatoren, die eine nominelle Betriebsspannung Vₐ bzw. V_{b} von 2,5 V haben. Die Untergruppen 3 haben somit bei diesem Beispiel jeweils eine nominelle Betriebsspannung V_{ab} von 5,0 V. Nimmt man beispielsweise an, dass der Energiespeicher 1 zehn in Reihe geschaltete Untergruppen 3 aufweist, so beträgt die nominelle Gesamt-Betriebsspannung V des Energiespeichers 1 somit 50 V.

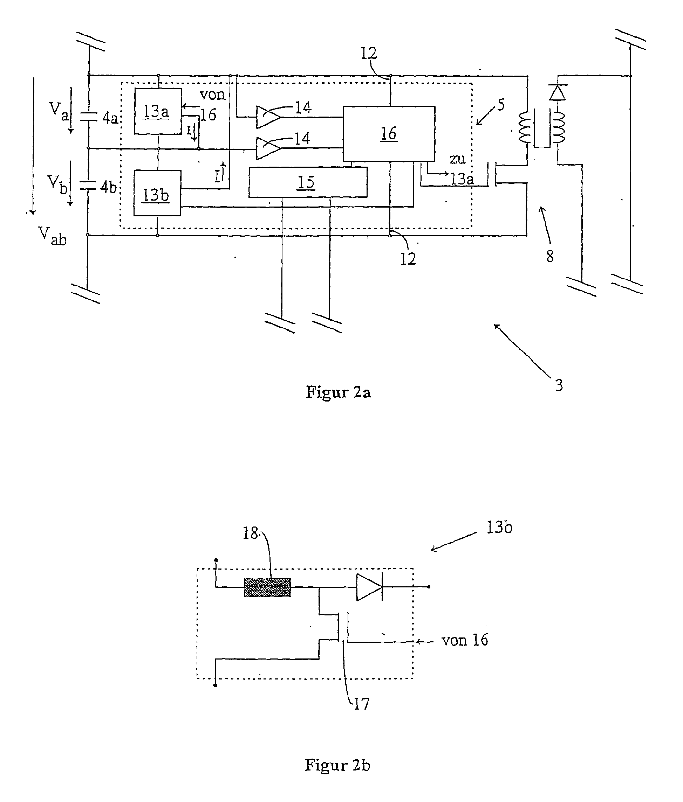

Jeder Energiespeicher-Untergruppe 3 ist eine Ladungsumverteilungs-Steuereinheit 5 zugeordnet. Die Ladungsumverteilungs-Steuereinheiten 5 messen als Eingangsgröße jeweils die momentane Spannung V_{ab} der zugeordneten Energiespeicher-Untergruppe 3 (als weitere Eingangsgröße messen sie auch die momentanen Spannungen Vₐ und V_{b} der zur jeweiligen Untergruppe gehörigen Speicherelemente 4 - dies wird unten im Zusammenhang mit Fig. 2 näher erläutert). Sämtliche Ladungsumverteilungs-Steuereinheiten 5 stehen außerdem über einen Steuerbus 6 mit einem übergeordneten Steuergerät 7 in Kommunikationsverbindung. Die Ladungsumverteilungs-Steuereinheiten 5 teilen dem Steuergerät 7 z. B. laufend die von ihnen gemessene momentane Spannung V_{ab} der jeweils zugehörigen Untergruppe 3 mit.

Bei manchen Ausführungsformen ist in jeder Ladungsumverteilungs-Steuereinheit 5 ein interner Spannungs-Schwellenwert fest gespeichert. Diejenigen Ladungsumverteilungs-Steuereinheiten 5, bei denen die Spannung Vₐ bzw. V_{b} eines einzelnen Speicherelements 4 diesen Spannungs-Schwellenwert überschreitet, führen eine untergruppen-interne Spannungssymmetrierung durch Ladungsumverteilung innerhalb der Untergruppe 3 durch. Außerdem führen diejenigen Ladungsumverteilungs-Steuereinheiten 5, deren zugeordnete Untergruppenspannung V_{ab} das n-fache des Spannungs-Schwellenwerts überschreitet, eine Spannungssymmetrierung zwischen den Untergruppen 3 durch Abführung von Ladung aus der eigenen Untergruppe 3 durch (wobei n die Anzahl der in Reihe geschalteten Speicherelemente 4 einer Untergruppe 3 ist; im vorliegenden Beispiel mit zwei Speicherelementen 4 pro Untergruppe 3 handelt es sich also um das Zweifache des Spannungs-Schwellenwerts). Die Ladungsumverteilungs-Steuereinheiten 5 können aufgrund des internen Spannungs-Schwellenwerts diese Symmetrieraktivität autonom, d. h. unabhängig vom Steuergerät 7 durchfuhren. Bei anderen Ausführungsformen ist der Spannungs-Schwellenwert hingegen nicht fest in den Ladungsumverteilungs-Steuereinheiten 5 gespeichert, sondern wird diesen stattdessen vom übergeordneten Steuergerät 7 über den Steuerbus 6 vorgegeben; dieser vorgegebene Wert wird dann nur flüchtig in den Ladungsumverteilungs-Steuereinheiten 5 gespeichert (z. B. nur für eine fest begrenzte maximale Zeitdauer und/oder bis er durch einen neuerlich seitens des Steuergeräts 7 mitgeteilten Spannungs-Schwellenwert überschrieben wird). Bei solchen Ausführungsformen bestimmt also das Steuergerät 7, ab welchem Ausmaß etwaige Spannungsasymmetrien zu beseitigen sind. Bei noch weiteren Ausführungsformen sind beide Arten der Schwellenwertimplementierung kombiniert, indem die Ladungsumverteilungs-Steuereinheiten 5 sowohl über einen internen, fest gespeicherten Schwellenwert verfügen als auch einen Schwellenwert vom Steuergerät 7 vorgegeben bekommen; im Betrieb verwenden sie dann zur Entscheidung, ob eine Schwellenwertüberschreitung vorliegt, einen dieser Schwellenwerte (z. B. verwenden sie den niedrigeren der beiden Schwellenwerte). Eine solche Kombination erlaubt einerseits eine Beeinflussung der Symmetrieraktivität durch das übergeordnete Steuergerät 7, ermöglicht aber andererseits auch dann noch eine Funktion der Ladungsumverteilungsschaltung 2 auf der Grundlage völlig autonom agierender Ladungsumverteilungs-Steuereinheiten 5, wenn das Steuergerät 7 nicht arbeitet oder die Kommunikationsverbindung über den Steuerbus 6 unterbrochen ist und daher kein vom Steuergerät 7 vorgegebener Schwellenwert zur Verfügung steht.

Bei einigen der Ausführungsformen ist in allen Ladungsumverteilungs-Steuereinheiten 5 der gleiche Schwellenwert fest gespeichert; entsprechend gibt bei diesen Ausführungsformen auch das übergeordnete Steuergerät 7 einen gemeinsamen Schwellenwert für alle Ladungsumverteilungs-Steuereinheiten 5 vor.

Um überschüssige Ladung abführen zu können, ist jede Untergruppe 3 mit einem Hochsetzsteller (d. h. einem spannungserhöhenden Gleichspannungswandler) ausgerüstet, der die Spannung V_{ab} der jeweils zugehörigen Untergruppe 3 insgesamt (nicht jedoch selektiv die Spannung Vₐ oder V_{b} der einzelnen Speicherelemente 4 der Untergruppe 3) verringern kann und daher im folgenden Untergruppenwandler 8 genannt wird.

Eingangsseitig sind die Untergruppenwandler 8 jeweils zur zugehörigen Untergruppe 3 parallel geschaltet; an ihrem Eingang liegt also die jeweilige Untergruppenspannung V_{ab} an. Ausgangsseitig sind die Untergruppenwandler 8 parallel zueinander mit den Anschlüssen des gesamten Energiespeichers 1 verbunden; an ihrem Ausgang liegt also die - wesentlich höhere - Gesamtspannung V an. Wenn die Spannung einer Untergruppe 3 erniedrigt werden soll, steuert die betreffende Ladungsumverteilungs-Steuereinheit 5 ihren Untergruppenwandler 8 so an, dass dieser unter Spannungshochsetzung Ladungen aus der Untergruppe 3 zur Aus gangsseite pumpt und so dem gesamten Energiespeicher 1 zuführt. Hierdurch wird die entnommene Ladung gleichmäßig auf alle Untergruppen 3 des Energiespeichers 1 verteilt, so dass die Spannung V_{ab} der betreffenden Untergruppe 3 relativ zu den Untergruppenspannungen V_{ab} der anderen Untergruppen 3 verringert wird. Dies erfolgt beispielsweise nach Art einer Hysterese so lange, bis ein zweiter, niedrigerer Schwellenwert unterschritten wird. Durch dieses Abpumpen von Ladungen aus spannungsmäßig zu hoch liegenden Untergruppen und Rückspeisen der Ladungen in den gesamten Energiespeicher 1 wird somit eine Spannungssymmetrierung der Untergruppen 3 erzielt.

Für die Untergruppenwandler 8 kann jeder geeignete Typ von Hochsetzsteller Verwendung finden In der beispielhaften Ausführungsform von Fig. 1 ist hierfür ein Sperrwandler vorgesehen, welcher durch einen Transformator 9 gebildet ist, dessen Primärwicklung in Serie mit einem Schalter 10 (hier einem Leistungstransistor) und dessen Sekundärwicklung in Serie mit einem Rückflußverhinderer 11 mit Durchlassrichtung zum positiven Anschluss des Energiespeichers 1 (hier einer Diode) geschaltet ist. Schließen bzw. Öffnen des Schalters 10 führt aufgrund von Selbstinduktion zu einer induzierten Spannung auf der Sekundärseite des Transformators 9, und diese wiederum zu einem Stromfluss durch den Rückflussverhinderer 11 auf das höhere Spannungsniveau V des Energiespeichers 1. Das Öffnen und Schließen des Schalters 10 wird durch Ansteuerung seitens der Ladungsumverteilungs-Steuereinheit 5 bewirkt.

Zu ihrer eigenen Stromversorgung ist die Ladungsumverteilungs-Steuereinheit 5 mit Stromversorgungsanschlüssen 12 an den positiven bzw. negativen Pol der zugehörigen Energiespeicher-Untergruppe 3 angeschlossen. Die Ladungsumverteilungs-Steuereinheiten 5 beziehen also ihren eigenen Betriebsstrom aus der jeweils zugeordneten Untergruppe 3, und zwar mit der Untergruppenspannung V_{ab}. Der in der Schaltung von Fig. 1 gezeigte Abgriff jeweils zwischen den Speicherelementen einer Untergruppe 3 dient der Spannungsmessung und Spannungssymmetrierung der betreffenden Speicherelemente 4 einer Untergruppe 3 zueinander (wie unten im Zusammenhang mit Fig. 2 erläutert werden wird), jedoch nicht der Stromversorgung der Ladungsumverteilungs-Steuereinheit 5.

Fig. 2a zeigt eine Energiespeicher-Untergruppe 3 von Fig. 1, bei der das Ladesteuergerät 5 detaillierter als in Fig. 1 dargestellt ist. Und zwar umfasst es zwei Spannungswandler 13a, 13b, zwei Spannungsmessverstärker 14, eine Kommunikationsschnittstelle 15 sowie einen Mikrocontroller 16. Die Spannungswandler 13a, 13b dienen der untergruppen-internen Ladungsumverteilung der Speicherelemente 4 der betrachteten Untergruppe 3 relativ zueinander und werden daher im Folgenden auch "Speicherelementwandler" genannt. Der Speicherelementwandler 13a, b eines Speicherelements 4a, b ist mit seinem Ausgang mit dem positiven Anschluss des jeweils anderen Speicherelements 4b bzw. 4a verbunden. Die Speicherelementwandler 13a, 13b sind beispielsweise Drosselwandler, wobei der obere Speicherelementwandler 13a z. B. ein spannungsherabsetzender Wandler und der untere Speicherelementwandler 13b z. B. ein spannungsheraufsetzender Wandler ist. Eine beispielhafte Schaltung für einen spannungsheraufsetzenden Drosselwandler 13b ist schematisch in Fig. 2b gezeigt. Ähnlich wie bei dem im Zusammenhang mit Fig. 1 beschriebenen Untergruppenwandler 8 erfolgt bei den Speicherelementwandlern 13a, b ein Abführen von Ladung aus dem jeweils zugehörigen Speicherelement 4a, b, indem jeweils ein Leistungsschalter 17 in getakteter Weise betätigt wird. Dies ruft durch Selbstinduktion in einer Drossel 18 einen Stromfluss unter Spannungsheraufsetzung bzw. -herabsetzung hervor. Die Ansteuerung des Schalters 17 erfolgt - wie diejenige des Schalters 10 - durch den Mikrocontroller 16. Eine entsprechende Schaltung für den spannungsherabsetzenden Drosselwandler 13b erhält man z. B. aus Fig. 2b im Wesentlichen durch Vertauschung des Schalters 17 und der Drossel 18.

Der Mikrocontroller 16 misst über die Spannungsmessverstärker 14 laufend die Spannungen Vₐ und V_{b} der beiden Speicherelemente 4a, b (genauer misst er bei der Ausführungsform gemäß Fig. 2a einerseits die Spannung V_{ab} der Untergruppe sowie die Spannung V_{b} des unteren Speicherelements 4b und errechnet sich hieraus durch Differenzbildung (V_{ab}-V_{b}) die Spannung Vₐ des oberen Speicherelements 4). Falls der Mikrocontroller 16 hierbei einen über dem genannten ersten Schwellenwert liegenden Spannungsunterschied zwischen Vₐ und V_{b} feststellt, führt er eine interne Symmetrierung der Speicherelemente 4a, b der Untergruppe 3 durch. Hierzu taktet er den Leistungsschalter 17 desjenigen Speicherelementwandlers 13 a oder 13b, der dem Speicherelement 4a bzw. 4b mit der höheren der beiden Spannungen Vₐ bzw. V_{b} zugeordnet ist. Hierdurch wird dem betreffenden Speicherelement 4a bzw. 4b Ladung entnommen und dem anderen Speicherelement 4b bzw. 4a derselben Untergruppe 3 zugeführt (wobei im Fall einer spannungshochsetzenden Ladungsabführung aus dem unteren Speicherelement 4b diese Ladung der gesamten Untergruppe 3 zugeführt wird, so dass ein Teil dieser Ladung (nämlich ungefähr die Hälfte) wieder in das untere Speicherelement 4b zurückfließt. Als Nettoeffekt ergibt sich aber trotz dieser "Verdünnung" eine Ladungsabfuhr vom unteren Speicherelement 4b in das obere 4a). Diese Symmetrierung erfolgt beispielsweise nach Art einer Hysterese so lange, bis ein zweiter, niedrigerer Schwellenwert unterschritten wird. Als Schnittstelle des Mikrocontrollers 16 zum Steuerbus 6 und damit zum übergeordneten Steuergerät 7 dient die Kommunikationsschnittstelle 15.

Wie bereits im Zusammenhang mit Fig. 1 erläutert wurde, erfolgt die Stromversorgung der Ladungsumverteilungs-Steuereinheit 5 über die Stromversorgungsanschlüsse 12 aus der zugehörigen Energiespeicher-Untergruppe 3 mit deren Spannung V_{ab}. In Fig. 2a ist beispielsweise die Zuführung dieser Versorgungsspannung zum Mikrocontroller 16 gezeigt. Entsprechende Zuführungen sind natürlich für die anderen Baugruppen der Ladungsumverteilungs-Steuereinheit 5 vorgesehen, soweit diese einer Stromversorgung bedürfen, so z. B. für die Spannungsmessverstärker 14 und die Kommunikationsschnittstelle 15.

Der - bereits im Zusammenhang mit Fig. 1 erläuterte - erste Schwellenwert, bei dessen Überschreitung eine gruppen-interne Symmetrierung von Speicherelementen 4 vorgenommen wird, liegt beispielsweise 0,1 V über der nominellen Betriebsspannung eines Speicherelements 4, also z. B. bei 2,6 V (bei den oben beispielhaft genannten Ultracap-Kondensatoren mit 2,5 V nomineller Betriebsspannung). Entsprechend liegt dann der doppelte Schwellenwert, bei dessen Überschreitung eine Symmetrierung von Untergruppen 3 vorgenommen wird, bei 5,2 V. Bei anderen Ausführungsformen wird hingegen die nominelle Betriebsspannung selbst als Schwellenwert gesetzt; er beträgt also bei dem genannten Beispiel 2,5 V (bzw. - verdoppelt - 5,0 V). Hierdurch wird jegliche Überladung, d. h. eine Ladung über die nominelle Betriebsspannung hinaus, vermieden. Sollte der Energiespeicher 1 einmal so weit aufgeladen werden, dass das jeweils andere Speicherelement 4 einer Untergruppe 3 bzw. die anderen Untergruppen 3 die abzuführende Ladung nicht aufnehmen können, z. B. weil seine bzw. ihre Spannung ebenfalls den Schwellenwert überschreitet, so kommt es aufgrund der mit den Umladungsversuchen einhergehenden Strömen zu Verlusten (und damit zur Energiedissipation in Wärme), die schließlich zur gewünschten Spannungsabnahme insgesamt führen.

Der - ebenfalls bereits im Zusammenhang mit Fig. 1 erwähnte - zweite Schwellenwert liegt zum Bewirken des Hystereseeffekts etwas unter dem ersten Schwellenwert, z. B. um einen fest vorgegebenen Differenzbetrag, der beispielsweise 0,1 V betragen kann. Bei einem ersten Schwellenwert von z. B. 2,5 Volt wird eine Symmetrieraktivität also wieder beendet, wenn die Speicherelement-Spannung Vₐ bzw. V_{b} einen Wert von 2,4 V bzw. die Untergruppen-Spannung V_{ab} einen Wert von 4,8 V unterschreitet.

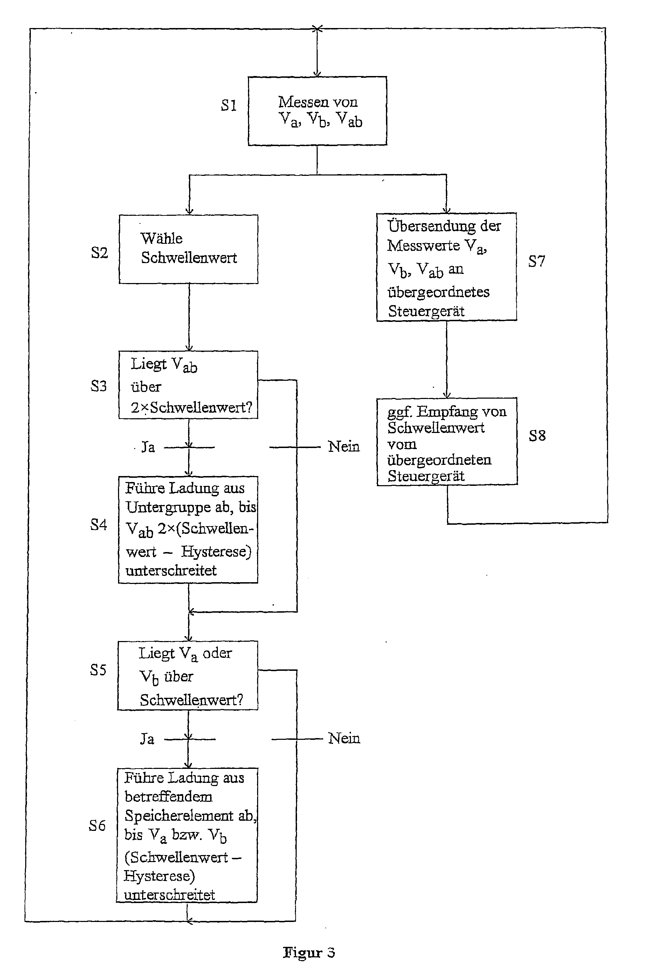

Fig. 3 ist ein schematisches Flussdiagramm der jeweils von einem Mikrocontroller 16 einer Untergruppe 3 ausgeführten Aktivitäten. Der Ablauf wird zyklisch durchgeführt, ist also nicht terminiert. In der Darstellung von Fig. 3 beginnt er bei S 1 mit dem Messen der momentanen Spannung V_{ab} der zugehörigen Untergruppe 3 sowie den momentanen Spannungen Vₐ, V_{b} der einzelnen, zur Untergruppe 3 gehörenden Speicherelemente 4a, 4b. Wie oben bereits erwähnt wurde, brauchen herbei nicht etwa sämtliche dieser Spannungswerte (im engeren Sinn) gemessen werden; vielmehr ist mit S 1 auch die Möglichkeit eingeschlossen, eine der genannten Spannungen (z. B. Vₐ) aus den anderen gemessenen Werten zu berechnen (z. B. gemäß Vₐ=V_{ab}-V_{b}). Bei S2 wird ein für den vorliegenden Zyklus zu wählender Spannungs-Schwellenwert ausgewählt.. Dies ist beispielsweise das Minimum eines fest gespeicherten internen Schwellenwerts und eines flüchtig gespeicherten, vom Steuergerät 7 vorgegebenen Schwellenwerts. Bei S3 ermittelt der Mikrocontroller 16, ob der gemessene Spannungswert V_{ab} der ihm zugeordneten Untergruppe 3 über dem zweifachen gewählten Schwellenwert liegt. Falls dies der Fall ist, veranlasst er bei S4 die Abführung von Ladung aus der besagten Untergruppe 3, und zwar so lange bis die Untergruppenspannung V_{ab} einen geeigneten zweiten Schwellenwert (z. B. das Doppelte der Differenz des bei S2 gewählten ersten Schwellenwerts und einer Hysterese) unterschreitet (zu diesem Zweck wird bei S4 laufend V_{ab} gemessen). Falls bei S3 jedoch keine Überschreitung des doppelten Schwellenwerts festgestellt wird, entfällt die Ladungsabführung bei S4. Bei S5 überprüft der Mikrocontroller 16, ob die Spannung Vₐ bzw. V_{b} der einzelnen Speicherelemente 4 der ihm zugeordneten Untergruppe 3 über dem bei S2 ausgewählten Schwellenwert liegt. Falls dies zutrifft, führt er bei S6 Ladung aus dem betreffenden Speicherelement (z. B. 4a) in das andere Speicherelement (z. B. 4b) derselben Untergruppe 3 ab, bis die betreffende Spannung (z. B. 10 Vₐ) einen geeigneten zweiten Schwellenwert (z. B. die Differenz des genannten ersten Schwellenwerts und einer Hysterese) unterschreitet (zu diesem Zweck wird bei S6 die betreffende Spannung (z. B. Vₐ) laufend gemessen). Wird bei S5 jedoch keine Überschreitung des Schwellenwerts festgestellt, entfällt die Ladungsumverteilung bei S6. Der Ablauf setzt sich dann zyklisch bei S1 fort.

In einem weiteren Prozess, der zu diesen Symmetrieraktivitäten nebenläufig ist, leitet der Mikrocontroller 16 bei S7 die gemessenen Spannungen V_{ab}, Vₐ, V_{b} der ihm zugeordneten Untergruppe 3 an das übergeordnete Steuergerät 7 weiter. Im Übrigen ist der Mikrocontroller 16 laufend bereit, einen neuen Schwellenwert vom übergeordneten Steuergerät 7 zu empfangen. Dies kann beispielsweise so geschehen sein, dass der Mikrocontroller 16 in dem nebenläufigen Prozess bei S8 überprüft, ob ein neuer Schwellenwert eingegangen ist; ein solcher Schwellenwert ersetzt dann den bisher verwendeten, vom Speisegerät 7 vorgegebenen Schwellenwert, der bei S2 bis S6 Verwendung findet. Bei anderen Ausführungsformen sind andere Empfangsarten implementiert; beispielsweise kann der Mikrocontroller 16 in dem zuerst genannten Prozess vor S2 eine entsprechende Eingangsprüfung und ggf. Schwellenwertersetzung durchfuhren. Nach S8 kehrt der nebenläufige Prozess ebenfalls zu S1 zurück.

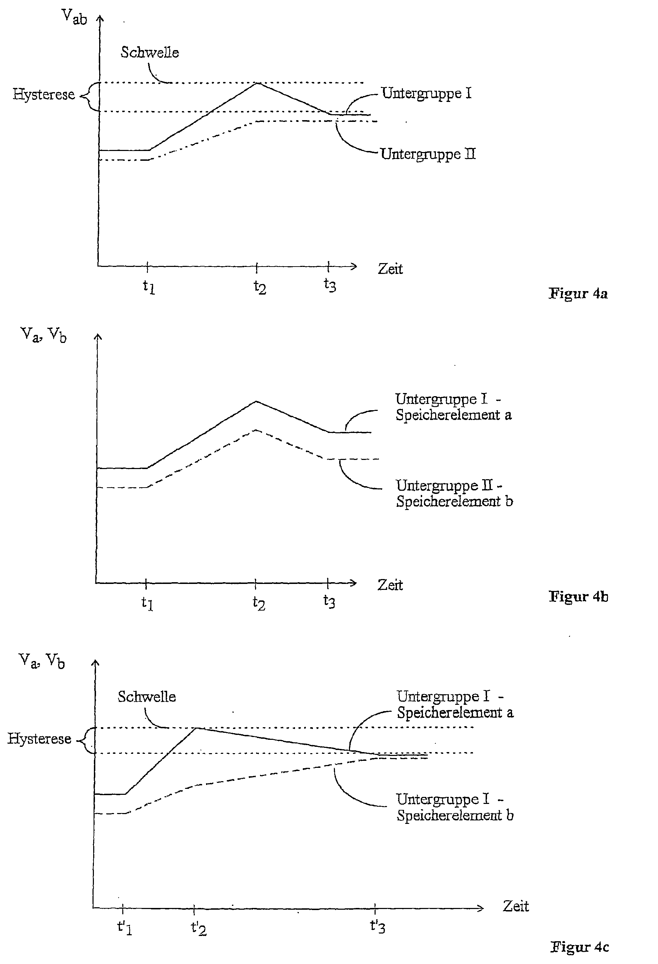

Fig. 4 veranschaulicht in drei verschiedenen Graphen Spannungsverläufe von zwei Energiespeicher-Untergruppen 3 (genannt Untergruppen I und II) sowie von zwei Speicherelementen 4 (genannt Speicherelemente a und b) einer der beiden Untergruppen 3 (nämlich Untergruppe I) als Funktion der Zeit. Fig. 4a zeigt beispielhaft, dass im Verlaufe eines Aufladevorgangs zwischen Zeitpunkten t₁ und t₂ die Spannung V_{ab} einer der Untergruppen (nämlich der Untergruppe I) schneller zunimmt als jene der anderen Untergruppe (nämlich der Untergruppe II). Entsprechend können auch die Spannungen Vₐ und V_{b} der zu ein- und derselben Untergruppe 3 gehörenden Speicherelemente 4a, 4b auseinander laufen. So zeigt Fig. 4b beispielhaft, dass bei dem Aufladevorgang zwischen t₁ und t₂ die - hier bereits anfangs höher liegende - Spannung Vₐ des ersten Speicherelements 4a (der hier beispielhaft herausgegriffenen Untergruppe I) etwas stärker zunimmt als jene des ersten Speicherelements 4a dieser Untergruppe.

Zum Zeitpunkt t₂ überschreitet in dem in Fig. 4a dargestellten Beispiel die Spannung V_{ab} der Untergruppe I den (ersten) Schwellenwert. Dies löst den oben beschriebenen Spannungssymmetrierungsvorgang aus, bei dem Ladung aus der Untergruppe I herausgeführt und in den gesamten Energiespeicher 1 rückgespeist wird. Als Folge sinkt die Spannung V_{ab} der Untergruppe I ab, bis sie zum Zeitpunkt t₃ den zweiten Schwellenwert (dieser ist z. B. die Differenz des ersten Schwellenwerts und einer Hysterese) unterschreitet, so dass der Symmetrierungsvorgang bei t₃ endet. Genau genommen erhöht sich die Spannung V_{ab} der anderen Untergruppe (Untergruppe II) durch die Ladungsrückspeisung; aufgrund deren Verteilung auf alle Untergruppen des Energiespeichers ist dieser Effekt stark verdünnt und daher der schematischen Darstellung der Fig. 4a nicht entnehmbar. In Fig. 4a ist zur Veranschaulichung angenommen, dass der Aufladungsvorgang zu Beginn des Symmetrierungsvorgangs (also bei t₂) endet (tatsächlich kann die Aufladung noch weiter fortschreiten und hiermit den Symmetrierungsvorgang überlagern).

Fig. 4b veranschaulicht, dass diese Spannungssymmetrierung der Untergruppen untereinander im Wesentlichen keine symmetrierende Wirkung auf die einzelnen Speicherelemente einer Untergruppe hat. Hierzu wird in Fig. 4b idealisierend angenommen, dass nicht simultan zu der oben bei Fig. 4a beschriebenen Symmetrierung der Untergruppe I auch eine untergruppen-interne Symmetrierung vorgenommen wird (tatsächlich wird letzteres jedoch i. a. der Fall sein, da eine Überschreitung des (doppelten) Schwellenwerts in der Untergruppe i. a. auch zu einer Überschreitung des (einfachen) Schwellenwerts durch zumindest eines der Speicherelemente mit sich bringt). Unter dieser Annahme nehmen gemäß Fig. 4b bei der Ladungsentnahme aus der Untergruppe I zwischen t₂ und t₃ zwar die Absolutwerte der Spannungen Vₐ und V_{b} der einzelnen Speicherelemente entsprechend ab, deren Spannungsdifferenz bleibt jedoch im Wesentlichen unverändert.

Wie oben bereits beschrieben wurde, erfolgt die Symmetrierung der einzelnen Speicherelemente einer Untergruppe vielmehr in einem hiervon unabhängigen untergruppen-internen Symmetrierungsprozess, der in Fig. 4c gezeigt ist. Zur Veranschaulichung wird in Fig. 4c nun angenommen, dass in dem hier gezeigten Zeitraum t'₁ bis t'₃ keine simultane untergruppen-externe Symmetrierung nach Art von Fig. 4a vorgenommen wird, um in der Darstellung - wie bei Fig. 4b - eine Überlagerung der beiden Symmetrierungsprozesse zu vermeiden. Und zwar wird hier beispielhaft angenommen, dass zwischen t'₁ und t'₂ eine Aufladung der hier betrachteten Untergruppe I stattfindet, wobei das Speicherelement a dieser Untergruppe I bei t'₂ den (ersten) Schwellenwert überschreitet (bei diesem handelt es sich beispielsweise um die Hälfte des Schwellenwerts von Fig. 4a). Als Folge der Schwellenwertüberschreitung wird nun dem Speicherelement a Ladung entnommen und dem anderen Speicherelement b der betrachteten Untergruppe I zugeführt. Entsprechend sinkt die Spannung Vₐ des Speicherelements a und steigt die Spannung V_{b} des Speicherelements b, bis beim Zeitpunkt t'₃ die Spannung Vₐ einen zweiten Schwellenwert (beispielsweise den ersten Schwellenwert abzüglich einer Hysterese) unterschreitet, woraufhin die Untergruppen-interne Spannungssymmetrierung endet.

Fig. 5 veranschaulicht eine Zwillingsanordnung 20 von zwei Speicherelementen 4, bei denen es sich hier beispielsweise um Ultracap-Kondensatoren handelt, deren Gehäuse eine langgestreckt-zylindrische Form mit zwei z. B. kreisförmigen Stirnseiten hat. Die beiden Speicherelemente 4 sind parallel mit in einer gemeinsame Ebene liegenden Längsachsen der Gehäusezylinder angeordnet. An seiner Längsachse weisen die Speicherelemente 4 an den jeweils gegenüberliegenden Stirnseiten einen positiven Stromanschluss 21 bzw. negativen Stromanschluss 22 auf. Die Speicherelemente 4 sind hinsichtlich ihrer Polaritäten entgegengesetzt orientiert angeordnet, d. h. an den benachbarten Stirnseiten liegt jeweils ein positiver Stromanschluss 21 des einen Speicherelements 4 und ein negativer Stromanschluss 22 des anderen Speicherelements 4. An einer Seite sind die beiden benachbarten Stromanschlüsse 21, 22 mit einem Verbindungsleiter 23 gekoppelt. Die beiden Speicherelemente bilden somit eine Untergruppe 3 von zwei Speicherelementen 4 entsprechend den in Fig. 1 und 2 gezeigten Untergruppen (und sind daher mit "4a" und "4b" gekennzeichnet). Die auf der anderen Seite liegenden Stromanschlüsse 21 bzw. 22 bilden die positive bzw. negative Anschlußklemme 24 bzw. 25 dieser Untergruppe 3. Sie sind jeweils mit Verbindungsleisten 26 mit weiteren Zwillingsanordnungen der gezeigten Art verbunden. Zwischen den beiden genannten Anschlussklemmen 24, 25 ist der der Untergruppe 3 zugehörige Teil einer Ladungsumverteilungsschaltung der oben beschriebenen Art angeordnet. Es handelt sich hierbei also um eine Ladungsumverteilungs-Steuereinheit 5 und einen Untergruppenwandler 8 gemäß Fig. 1 und 2. Diese Teilschaltung bezeichnet mit "27" ist einerseits mit den beiden Anschlussklemmen 24, 25 der Untergruppe 3 verbunden und hat andererseits einen Abgriff 28 des Potentials zwischen den beiden Speicherelementen 4a, 4b, der den auf diesem Potential liegenden Verbindungsleiter 23 kontaktiert (bei anderen Ausführungsformen, bei denen die Gehäuse der Speicherelemente 4a, 4b auf diesem Zwischenpotential liegen, kann stattdessen eine Verbindung zu einem oder beiden dieser Gehäuse zum Abgriff des Zwischenpotentials vorgesehen sein). Die Teilschaltung 27 ist außerdem noch mit der positiven und negativen Anschlussklemme des gesamten Energiespeichers, dessen Teil die Zwillingsanordnung 20 ist, verbunden. Außerdem ist sie zur Kommunikationsverbindung mit einem übergeordneten Steuergerät über einen Steuerbus 6 gekoppelt.

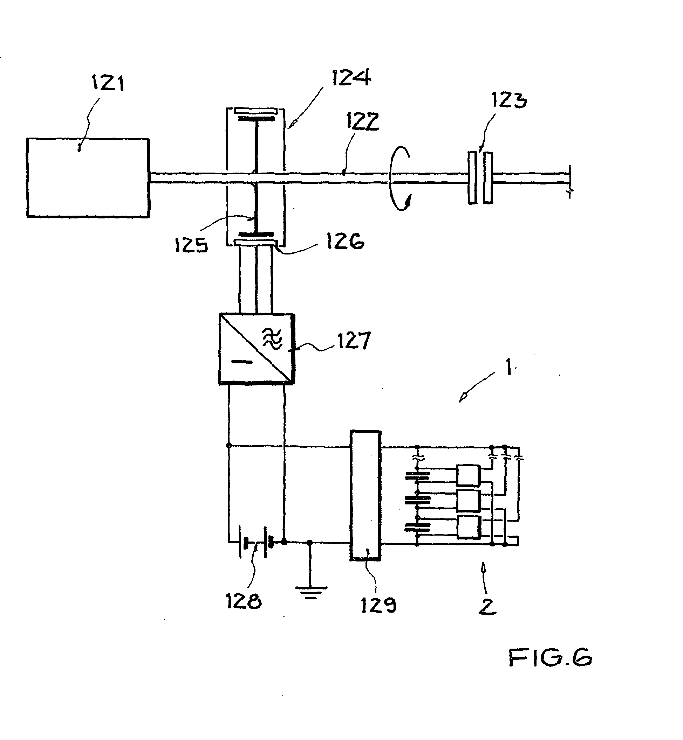

Fig. 6 veranschaulicht ein Kraftfahrzeug-Antriebssystem mit einem Energiespeicher 1 und einer Ladungsumverteilungsschaltung 2 gemäß Fig. 1 bis 5. Das Antriebssystem weist einen Verbrennungsmotor 121 auf, der Drehmoment über eine Antriebswelle 122 (z. B. die Kurbelwelle des Verbrennungsmotors 121), eine Kupplung 123 und weitere (nicht gezeigte) Teile eines Antriebsstrangs auf die Antriebsräder des Fahrzeugs abgibt. Auf der Antriebswelle 122 sitzt eine als Starter und/oder Booster und ggf. als Generator arbeitende elektrische Maschine 124, hier eine Drehstrom-Asynchronmaschine oder eine z. B. mit Permanentmagneten ausgerüstete Drehstrom-Synchronmaschine. Sie weist einen direkt auf der Antriebswelle 122 sitzenden und drehfest mit ihr verbundenen Läufer 125 sowie einen z. B. am Gehäuse des Verbrennungsmotors 121 abgestützten Ständer 126 auf. Die elektrische Maschine 124 und der Verbrennungsmotor 121 laufen permanent zusammen; das Starten des Verbrennungsmotors 121 und/oder die Boostfunktion erfolgen direkt und ohne Übersetzung. Die (hier nicht dargestellte) Wicklung des Ständers 126 wird durch einen Wechselrichter 127 mit elektrischen Strömen und Spannungen frei einstellbarer Amplitude, Phase und Frequenz gespeist. Der Wechselrichter 127 erzeugt diese Ströme und Spannungen aus einem Gleichspannungs-Eingangskreis, in dem eine herkömmliche Langzeitbatterie 128 (z. B. ein Blei-Schwefelsäure-Akkumulator z. B. mit 48 V Betriebsspannung) angeordnet ist. Mit dem Eingangskreis ist auch der Energiespeicher 1 mit der Ladungsumverteilungsschaltung 2 verbunden, und zwar über ein Lade-/Entladesteuergerät 129, welches auch die Funktion des übergeordneten Steuergeräts 7 in Fig. 1 übernimmt. Der Energiespeicher 1 ist., wie in Fig. 1 näher gezeigt wurde, aus in Reihe geschalteten Energiespeicher-Untergruppen 3 mit jeweils zugeordneten Symmetrierteilschaltungen 27 (Fig. 6) aufgebaut. Die Untergruppen 3 sind wiederum aus in Reihe geschalteten Speicherelementen aufgebaut, wobei in Fig. 6 jeweils eine solche Untergruppe durch ein Kondensatorsymbol repräsentiert ist. Wenn die elektrische Maschine 124 kurzzeitig einen hohen elektrischen Leistungsbedarf hat, etwa zum Direktstarten des Verbrennungsmotors 121 oder zur Drehmomentzugabe bei Fahrzeugbeschleunigung (Boost-Funktion), wird dem Energiespeicher 1 kurzzeitig hohe elektrische Leistung entnommen und der elektrischen Maschine 124 über den Wechselrichter 127 zugeführt. Das Nachladen des Energiespeicher 1 erfolgt während des laufenden Betriebs, z. B. wenn die elektrische Maschine 124 generatorisch arbeitet. Sollte der Energiespeicher 1 z.B. nach einem längeren Fahrzeugstillstand entladen sein, so kann er vor dem Startvorgang aus der Langzeitbatterie 128 aufgeladen werden. Die Mikrocontroller 16 der Ladungsumverteilungs-Steuereinheiten 5 werden bei völliger Entladung des Energiespeichers 1 nicht mehr versorgt und stellen daher dann ihre Arbeit ein. Sie sind so ausgebildet, dass sie nach einer Wiederkehr der Stromversorgung - nach Art eines Reset - an einem bestimmten Punkt ihres internen Programmzyklus zu arbeiten beginnen. Hierdurch wird vermieden, dass sie durch eine Entladung und spätere Wiederaufladung des Energiespeichers 1 in einen undefinierten Betriebszustand gelangen können. Das Symmetrieren des Energiespeicher 1 erfolgt gemäß der oben im Zusammenhang mit Fig. 1-4 beschriebenen Art und Weise.

Die bevorzugten Ausführungsformen erlauben die Ladungssymmetrierung von Speicherpaketen mit hohem Gesamtwirkungsgrad und relativ geringem baulichen Aufwand.

## Patentansprüche

1. Ladungsumverteilungsschaltung für einen Energiespeicher (1) mit mehreren, in Reihe geschalteten Speicherelementen (4);
wobei die Ladungsumverteilungsschaltung (2) mehrere Ladungsumverteilungs-Steuereinheiten (5) zur Spannungsüberwachung und Ladungsumverteilung umfasst, denen jeweils eine Energiespeicher-Untergruppe (3) von Speicherelementen (4) zugeordnet ist und die Ladungsumverteilungsschaltung (2) so eingerichtet ist, dass eine Spannungsüberwachung und eine darauf basierende Ladungsumverteilung bei jedem einzelnen der Speicherelemente (4) erfolgt;
**dadurch gekennzeichnet, dass**
die Ladungsumverteilungs-Steuereinheiten (5) die zu ihrer eigenen Versorgung dienende Energie jeweils aus der ihnen zugeordneten Untergruppe (3) entnehmen und so mit einer Spannung versorgt werden, die größer ist als die Spannung eines einzelnen der Speicherelemente (4) und kleiner ist als die Spannung des Energiespeichers (1); und bei welcher die Ladungsumverteilung derart erfolgt, dass einerseits zwischen den zu einer Untergruppe (3) gehörenden Speicherelementen (4) Ladung verteilt wird, und andererseits zwischen den Energiespeicher-Untergruppen (3) Ladung verteilt wird.

2. Ladungsumverteilungsschaltung nach Anspruch 1, bei welcher die eine Ladungsumverteilungs-Steuereinheit (5) versorgende Spannung die Summe der Spannungen der ihr zugeordneten Speicherelemente (4) ist.

3. Ladungsumverteilungsschaltung nach Anspruch 1 oder 2, bei welcher die Versorgung der Ladungsumverteilungs-Steuereinheit (5) mit der versorgenden Spannung ohne deren Hoch- oder Tiefsetzung erfolgt

4. Ladungsumverteilungsschaltung nach einem der Ansprüche 1 bis 3, bei welcher die Ladungsumverteilungs-Steuereinheiten (5) einerseits zur Ladungsumverteilung der Speicherelemente (4) unter sich mit untergruppen-internen, den einzelnen Speicherelementen (4) zugeordneten Spannungswandlern und andererseits zur Ladungsumverteilung der Untergruppen (3) zueinander mit jeweils einem der Untergruppe (3) zugeordneten Spannungswandler (8) ausgerüstet sind.

5. Ladungsumverteilungsschaltung nach einem der Ansprüche 1 bis 4, welche so eingerichtet ist, dass die Ladungsumverteilung so erfolgt, dass die Spannungen der Energiespeicher-Untergruppen (3) und der Speicherelementen (4) symmetriert werden.

6. Ladungsumverteilungsschaltung nach Anspruch 5, welche so eingerichtet ist, dass zur Ladungsumverteilung eine Energieentnahme aus Energiespeicher-Untergruppen (3) und Speicherelementen (4) erfolgt, deren Spannung relativ hoch liegt.

7. Ladungsumverteilungsschaltung nach Anspruch 6, bei welcher die einer Energiespeicher-Untergruppe (3) zwecks Spannungssymmetrierung des Energiespeichers (1) entnommene Energie der oder den anderen Untergruppe(n) (3) zugeführt wird.

8. Ladungsumverteilungsschaltung nach Anspruch 6 oder 7, bei welcher die einem Speicherelement (4) einer Untergruppe (3) zwecks Spannungssymmetrierung der Untergruppe (3) entnommene Energie dem oder den anderen Speicherelement(en) (4) der Untergruppe (3) zugeführt wird.

9. Ladungsumverteilungsschaltung nach einem der Ansprüche 1 bis 8, wobei die Speicherelemente (4) Ultracap-Kondensatoren sind.

10. Ladungsumverteilungsschaltung nach einem der Ansprüche 1 bis 9, wobei die Energiespeicher-Untergruppen (3) jeweils zwei Speicherelemente (4) aufweisen.

11. Energiespeicher (1) mit mehreren, in Reihe geschalteten Speicherelementen (4) und einer Ladungsumverteilungsschaltung gemäß einem der Ansprüche 1 bis 10.

12. Energiespeicher nach Anspruch 11, dessen Energiespeicher-Untergruppen (3) jeweils zwei Speicherelemente (4) aufweisen,
wobei die Speicherelemente (4) Stromanschlüsse (21, 22) an gegenüberliegenden Seiten aufweisen;
jeweils die beiden, eine Untergruppe (3) bildenden Speicherelemente (4) in einer Zwillingsanordnung (20) mit entgegengesetzter Orientierung hinsichtlich der Polarität der Stromanschlüsse (21, 22) zusammengefasst sind;
wobei die beiden Stromanschlüsse (21, 22) der Zwillingsanordnung (20) auf einer Seite elektrisch durchverbunden sind;
die Stromanschlüsse (21, 22) der Zwillingsanordnung auf der anderen Seite die Anschlussklemmen (24, 25) der Untergruppe (3) bilden und in Serie mit entsprechenden Stromanschlüssen der anderen Untergruppe(n) (3) geschaltet sind; und
die Ladungsumverteilungs-Steuereinheiten (5) jeweils mit den Anschlussklemmen (24, 25) den Zwillingsanordnung (20) und den durchverbundenen Stromanschlüssen (21, 22) elektrisch verbunden sind.

13. Antriebssystem für ein Fahrzeug, das zu Antriebszwecken einen Verbrennungsmotor (121) sowie eine elektrischen Maschine (124) aufweist und zur Speisung der elektrischen Maschine (124) mit einem Energiespeicher (1) mit einer Ladungsumverteilungsschaltung (2) nach einem der Ansprüche 1 bis 10 oder einem Energiespeicher (1) nach Anspruch 11 ausgerüstet ist.

## Claims

1. A charge redistribution circuit for an energy storage device (1) with several storage elements (4) which are connected in series;
wherein the charge redistribution circuit (2) comprises several charge redistribution control units (5) for monitoring the voltage and redistributing the charge, to which one energy storage device sub-group (3) of storage elements (4) is assigned respectively, and the charge redistribution circuit (2) is installed in such a manner that voltage is monitored and on this basis, charge is redistributed for each of the storage elements (4) individually,
**characterized in that**
the charge redistribution control units (5) which remove energy used for their own supply from the sub-group (3) assigned to them, and which are thus supplied with a voltage which is greater than the voltage of one of the individual storage elements (4) and lower than the voltage of the energy storage device (1); and with which the charge redistribution is conducted in such a manner that on the one hand, charge is distributed among the storage elements (4) which belong to a sub-group (3), and on the other hand among the energy storage device sub-groups (3).

2. A charge redistribution circuit according to claim 1, in which the voltage which supplies a charge redistribution control unit (5) is the total of the voltages of the storage elements (4) which are assigned to it.

3. A charge redistribution circuit according to either of claims 1 or 2, in which the supply of the charge redistribution control unit (5) is conducted with the supplying voltage without increasing or decreasing it.

4. A charge redistribution circuit according to any one of claims 1 to 3, in which the charge redistribution control units (5) are equipped with voltage converters (8), one of which is assigned respectively to the sub-group (3), on the one hand for the purpose of charge redistribution of the storage elements (4) among themselves with internal sub-group voltage converters which are assigned to the individual storage elements (4), and on the other hand, for the purpose of distributing the charge of the sub-groups (3) to each other.

5. A charge redistribution circuit according to any one of claims 1 to 4, which is installed in such a manner that the charge redistribution is conducted in such a manner that the voltages of the energy storage device sub-groups (3) and the storage elements (4) are symmetrised.

6. A charge redistribution circuit according to claim 5, which is installed in such a manner that for the purpose of charge redistribution, energy is removed from energy storage device sub-groups (3) and storage elements (4), the voltage of which is relatively high.

7. A charge redistribution circuit according to claim 6, in which the energy removed from an energy storage device sub-group (3) for the purpose of voltage symmetrisation of the energy storage device (1) is fed to the other sub-group(s) (3).

8. A charge redistribution according to either of claims 6 or 7, in which the energy removed from a storage element (4) of a sub-group (3) for the purpose of voltage symmetrisation of the sub-group (3) is fed to the other storage element(s) (4) of the sub-group (3).

9. A charge redistribution according to any one of claims 1 to 8, wherein the storage elements (4) are Ultracap capacitors.

10. A charge redistribution according to any one of claims 1 to 9, wherein the energy storage sub-groups (3) respectively comprise two storage elements (4).

11. An energy storage device (1) with several storage elements (4) which are connected in series and a charge redistribution circuit according to any one of claims 1 to 10.

12. An energy storage device according to claim 11, the energy storage device sub-groups (3) of which comprise two storage elements (4) respectively,
wherein the storage elements (4) comprise electrical connections (21, 22) on opposite sides;
the two storage elements (4) which form a sub-group (3) are compiled in a twin arrangement (20) with contrary orientation with regard to the polarity of the electrical connections (21, 22);
wherein on the other side, the electrical connections (21, 22) of the twin arrangement form the connection terminals (24, 25) of the sub-group (3) and are connected in series with corresponding electrical connections of the other sub-group(s) (3); and the charge redistribution control units (5) are electrically connected to the connection terminals (24, 25), the twin arrangement (20) and the through-connected electrical connections (21, 22) respectively.

13. A drive system for a motor vehicle which for drive purposes comprises a combustion engine (121) and an electrical machine (124) and which for the purpose of feeding the electrical machine (124) is equipped with an energy storage device (1) with a charge redistribution circuit (2) according to any one of claims 1 to 10, or an energy storage device (1) according to claim 11.

## Revendications

1. Circuit de répartition de charge pour un accumulateur d'énergie (1) avec plusieurs éléments accumulateurs (4) connectés en série ;
le circuit de répartition de charge (2) compreanant plusieurs unités de commande de répartition de charge (5) pour la surveillance de la tension et la répartition de charge, auxquelles un sous-groupe d'accumulateurs d'énergie (3) d'éléments accumulateurs (4) est respectivement attribué, et le circuit de répartition de charge (2) étant agencé de telle sorte qu'une surveillance de tension et une répartition de charge se basant sur celle-ci se produisent au niveau de chacun des différents éléments accumulateurs (4) ;
**caractérisé en ce que**
les unités de commande de circuit de répartition de charge (5) prélèvent l'énergie servant à leur propre alimentation respectivement sur le sous-groupe (3) leur étant attribué et sont ainsi alimentées par une tension qui est supérieure à la tension d'un seul des éléments accumulateurs (4) et inférieure à la tension de l'accumulateur d'énergie (1) ; et sur lequel la répartition de charge se produit de telle sorte que, d'une part, de charge est répartie entre les éléments accumulateurs (4) appartenant à un sous-groupe (3), et d'autre part, de charge est répartie entre les sous-groupes d'accumulateurs d'énergie (3).

2. Circuit de répartition de charge selon la revendication 1, sur lequel la tension alimentant une unité de commande de répartition de charge (5) est la somme des tensions des éléments accumulateurs (4) lui étant attribués.

3. Circuit de répartition de charge selon la revendication 1 ou 2, sur lequel l'alimentation de l'unité de commande de répartition de charge (5) est effectuée avec la tension d'alimentation sans son élévation ou son abaissement.

4. Circuit de répartition de charge selon l'une des revendications 1 à 3, sur lequel les unités de commande de répartition de charge (5) sont équipés d'une part pour la répartition de charge des éléments accumulateurs (4) entre eux avec des convertisseurs de tension internes aux sous-groupes, attribués aux différents éléments accumulateurs (4) et, d'autre part, pour la répartition de charge des sous-groupes (3) entre eux avec respectivement un convertisseur de tension (8) attribué au sous-groupe (3).

5. Circuit de répartition de charge selon l'une des revendications 1 à 4, lequel est agencé de telle sorte que la répartition de charge se produit de telle sorte que les tensions des sous-groupes d'accumulateurs d'énergie (3) et des éléments accumulateurs (4) sont symétrisées.

6. Circuit de répartition de charge selon la revendication 5, lequel est agencé de telle sorte que, pour la répartition de charge, une prise d'énergie est effectuée sur les sous-groupes d'accumulateurs d'énergie (3) et sur les éléments accumulateurs (4) dont les tensions sont relativement élevées.

7. Circuit de répartition de charge selon la revendication 6, sur lequel l'énergie prise sur un sous-groupe d'accumulateur d'énergie (3) à des fins de symétrisation de tension de l'accumulateur d'énergie (1) est amenée à l'autre ou aux autres sous-groupe(s) (3).

8. Circuit de répartition de charge selon la revendication 6 ou 7, sur lequel l'énergie prise sur un élément accumulateur (4) d'un sous-groupe aux fins de la symétrisation de tension du sous-groupe (3) est amenée à l'autre ou aux autres éléments accumulateurs(s) (4) du sous-groupe (3).

9. Circuit de répartition de charge selon l'une des revendications 1 à 8, les éléments accumulateurs (4) étant des supercondensateurs.

10. Circuit de répartition de charge selon l'une des revendications 1 à 9, les sous-groupes d'accumulateurs d'énergie (3) présentant respectivement deux éléments accumulateurs (4).

11. Accumulateur d'énergie (1) avec plusieurs éléments accumulateurs (4) connectés en série et un circuit de répartition de charge conforme à l'une des revendications 1 à 10.

12. Accumulateur d'énergie selon la revendication 11, dont les sous-groupes d'accumulateurs d'énergie (3) présentent respectivement deux éléments accumulateurs (4),
les éléments accumulateurs (4) présentant des raccordements électriques (21, 22) sur des côtés opposés ;
les deux éléments accumulateurs (4) formant un sous-groupe (3) étant respectivement regroupés en disposition jumelée (20) avec orientation opposée relativement à la polarité des raccordements électriques (21, 22) ;
les deux raccordements électriques (21, 22) de la disposition jumelée (20) étant reliés électriquement de façon passante sur un côté ;
les raccordements électriques (21, 22) de la disposition jumelée formant sur l'autre côté les bornes de raccordement (24, 25) du sous-groupe (3) et étant connectés en série avec des raccordements électriques correspondants de l'autre ou des autres sous-groupe(s) (3) ; et
les unités de commande de répartition de charge (5) étant respectivement reliées électriquement avec les bornes de raccordement (24, 25) de la disposition jumelée (20) et avec les raccordements électriques (21, 22) connectés de façon passante.

13. Système d'entraînement pour un véhicule, lequel présente un moteur à combustion (121) ainsi qu'une machine électrique (124) aux fins de l'entraînement et est équipé pour l'alimentation d'une machine électrique (124) avec un accumulateur d'énergie (1) avec un circuit de répartition de charge (2) selon l'une des revendications 1 à 10 ou avec un accumulateur d'énergie (1) selon la revendication 11.
